# EUROPÄISCHE PATENTANMELDUNG

(11) **EP 1 433 673 A1**
(43) Veröffentlichungstag der Anmeldung: **30.06.2004**
(21) Anmeldenummer: 02028897.3
(22) Anmeldetag: 23.12.2002
(51) Int. Cl.: B60R 22/30, A44B 11/25

(54) **Vorrichtung zum Einstellen der wirksamen Gurtbandlänge**

(71) Anmelder: Van Riesen GmbH u. Co. KG, D-32310 Enger (DE)
(72) Erfinder: Friedrich, Matthias, 32120 Hiddenhausen (DE)
(74) Vertreter: Vollmann, Heiko, Dipl.-Ing.

(57) **Zusammenfassung**

Die Vorrichtung dient zum Einstellen der wirksamen Gurtbandlänge für ein Gurtbandrückhaltesystem und weist einen Grundkörper 4 auf, in dem ein Auslösekörper 12 schwenkbar gelagert ist. Der Auslösekörper trägt einen Umlenkkörper 16, der begrenzt beweglich innerhalb des Auslösekörpers bewegbar ist. Der Auslösekörper ist gegenüber dem Grundkörper federkraftbeaufschlagt, so dass er selbsttätig in die das Gurtband arretierende Stellung gelangt.

## Beschreibung

Die Erfindung betrifft eine Vorrichtung zum Einstellen der wirksamen Gurtbandlänge für ein Gurtbandrückhaltesystem, wie es beispielsweise in Kraftfahrzeugen, in Flugzeugen, bei Kinderrückhaltesystemen und dergleichen eingesetzt wird, und zwar insbesondere in der Ausführung als Inline-Versteller, d. h. einer Anordnung, bei der die Verstellvorrichtung in Linie mit dem Gurt fluchtet, dessen Länge zu variieren ist.

Solche Inline-Versteller werden typischerweise bei Gurtbandrückhaltesystemen eingesetzt, bei denen die wirksame Gurtbandlänge nicht selbsttätig festgelegt, sondern entsprechend der Größe des zu sichernden Objektes, also beispielsweise der Größe des anzuschnallenden Kindes, individuell angepasst wird.

Bei bekannten Verstelleinrichtungen läuft das Gurtband zu einer Seite der Verstelleinrichtung in diese hinein, wird innerhalb der Verstelleinrichtung um 180° umgelenkt, so dass ein freies Ende in gleicher Richtung wieder aus der Verstelleinrichtung herausläuft. Durch Ziehen an dem freien Ende kann die wirksame Gurtbandlänge (am anderen Ende) verkürzt werden; zum Verlängern der wirksamen Gurtbandlänge hingegen muss das zu verlängernde wirksame Gurtbandende mit einer Hand gefasst werden, wobei mit der anderen Hand die Auslöseeinrichtung des Verstellers zu betätigen ist, wonach das Gurtband dann durch den Versteller hindurchgezogen werden kann. Bei üblichen Verstellern erfolgt dies in der Regel dadurch, dass der außen quer zur Durchlaufrichtung neben dem Gurtband angeordnete Auslösemechanismus durch Übergreifen mit der Hand gefasst und in eine Richtung des Gurtbandes entgegen Federkraft gezogen wird. Dieses Verlängern der wirksamen Gurtbandlänge kann mühsam sein, insbesondere wenn der Gurt unter Spannung steht. Der Verstellmechanismus ist nämlich so gestaltet, dass bei Beanspruchung des Gurtbandrückhaltesystems, also dann, wenn Spannung auf dem Gurt ist, die Zugkraft des Gurtes der Auslöseeinrichtung entgegenwirkt. Dies ist deshalb so gestaltet, weil mit zunehmender Zugkraft des Gurtes auch die Kraft, mit der der Gurt innerhalb des Verstellers festgehalten wird, zunehmen soll. Das führt allerdings dazu, dass bei bekannten Verstellern zum Auslösen der Arretiereinrichtung neben der üblichen Federkraft der Auslöseeinrichtung auch noch die Zugkraft des Gurtbandes zu überwinden ist.

Vor diesem Hintergrund liegt der Erfindung die Aufgabe zugrunde, eine Vorrichtung zum Einstellen der wirksamen Gurtbandlänge für ein Gurtbandrückhaltesystem zu schaffen, bei der die Auslösekraft, also die Kraft, die zum Aufheben der Arretierung des Verstellers erforderlich ist, weitgehend unabhängig von der am Gurtband anliegenden Zugkraft sein soll. Darüber hinaus soll die Vorrichtung einfach im Aufbau und zuverlässig in der Anwendung und Bedienung sein.

Diese Aufgabe wird gemäß der Erfindung durch die in Anspruch 1 angegebenen Merkmale gelöst. Vorteilhafte Ausgestaltungen der Erfindung sind in den Unteransprüchen, der nachfolgenden Beschreibung sowie der Zeichnung angegeben.

Grundgedanke der vorliegenden Erfindung ist es, die Gurtbandführung innerhalb des Verstellers sowie den Auslösemechanismus so zu gestalten, dass das Auslösen über einen Schwenkmechanismus erfolgt, der weitgehend unabhängig von der am Gurtband anliegenden Zugkraft betätigt werden kann. Die erfindungsgemäße Vorrichtung erlaubt nicht nur eine nahezu lastunabhängige, einfache Bedienung, sondern ist darüber hinaus auch kostengünstig und einfach herstellbar, da sie konstruktiv einfach und mit wenigen Bauteilen verwirklicht werden kann.

Auch wenn der Auslösemechanismus weitgehend unabhängig von der Zugbeanspruchung des Gurtbandrückhaltesystems funktionieren soll, so ist es aus Sicherheitsgründen doch zweckmäßig, zumindest einen Teil der auf den wirksamen Gurtbandabschnitt wirkenden Zugkraft so auf den Umlenkkörper zu leiten, dass eine Federkraft unterstützende Kraft entsteht, also die Klemmwirkung erhöht wird.

Der Grundkörper der erfindungsgemäßen Vorrichtung weist vorteilhaft einen in Richtung des Gurtbandsverlaufs im Wesentlichen u-förmigen Querschnitt auf, da dies im Hinblick auf die Inline-Funktion konstruktiv besonders günstig ist. Ein solches u-förmiges Profil des Grundkörpers kann durch ein entsprechend ausgebildetes Blech hergestellt werden. Die Abmessungen sind dabei so, dass der Schenkelabstand größer als die Gurtbandbreite ist, damit das Gurtband zumindest in Teilbereichen durch den Grundkörper durchgeführt werden kann.

Der Umlenkkörper kann als Teil eines Auslösekörpers ausgebildet sein, der wiederum innerhalb des Grundkörpers schwenkbar gelagert ist. Vorteilhaft weist dabei der Auslösekörper in Richtung des Gurtbandverlaufs ebenfalls einen im Wesentlichen u-förmigen Querschnitt auf, vorzugsweise dergestalt, dass der Schenkelabstand größer als die Gurtbandbreite, jedoch kleiner als der Schenkelabstand des Grundkörpers ist. Dann nämlich kann der Auslösekörper innerhalb des Grundkörpers gelagert werden, was von Vorteil ist, insbesondere im Hinblick auf ein kompakte und sicher zu bedienende Bauweise. Dabei kann auch der Auslösekörper als Blechformteil gebildet sein, was herstellungstechnisch günstig ist.

Der Umlenkkörper hingegen wird zweckmäßigerweise aus Vollmaterial bestehen, um die Zugkräfte des Gurtbandes über die gesamte Breite sicher aufzunehmen und um das Gurtband sicher und schonend durch die Vorrichtung zu führen. Vorteilhaft wird der Umlenkkörper in den seitlichen Schenkeln des Auslösekörpers gelagert, insbesondere in Langlöchern, so dass der Umlenkkörper in Gurtbandrichtung innerhalb des Auslösekörpers Spiel hat bzw. verschiebbar ist, so dass einerseits Fertigungstoleranzen selbsttätig ausgeglichen werden und andererseits zum Auslösen der Arretierung der Umlenkkörper aus seiner Klemmstellung ausweichen kann. Grundsätzlich wird der Umlenkkörper durch die Zugkraft des für das Gurtbandrückhaltesystem wirksamen Endes des Gurtbandes in seiner arretierenden Stellung gehalten. Es kann jedoch ggf. zur Verhinderung von Mikroschlupf noch eine Feder vorgesehen sein, welche den Umlenkkörper in seine das Gurtband fixierende Stellung drückt.

Festgelegt wird das Gurtband durch Klemmwirkung zwischen Umlenkrolle und Arretierkörper. Vorteilhaft ist der Arretierkörper Teil des Grundkörpers. Da er über die gesamte Breite des Gurtes gleichmäßig anliegen soll, kann er vorteilhaft als Stegabschnitt des Grundkörperprofils ausgebildet werden.

Damit der Auslösekörper ohne größere Reibung schwenkbar und darüber hinaus die im Auslösekörper über das Gurtband und den Umlenkkörper eingeleiteten Kräfte sicher aufgenommen und an den Grundkörper weitergeleitet werden können, erfolgt die Lagerung des Auslösekörpers am Grundkörper vorteilhaft mittels einer Achse, die aus Vollmaterial bestehen kann und vorteilhaft in den Schenkeln des Grundkörpers gehalten ist. Auf dieser Achse sitzt der Auslösekörper, welcher hierzu in seinen Schenkeln zueinander fluchtende Ausnehmungen aufweist, welche die Achse mit Spiel umgeben. Es versteht sich, dass die Lagerung auch kinematisch umgekehrt erfolgen kann, was jedoch konstruktiv weniger günstig ist.

Um mit möglichst geringen Kräften die Vorrichtung auslösen zu können, d. h. die Klemmwirkung aufzuheben, ist es zweckmäßig, einen möglichst großen Hebel zur Achse zu haben. Deshalb wird zweckmäßigerweise am Auslösekörper ein mit Abstand zur Achse angeordneter Stegbereich als Betätigungsfläche ausgebildet, so dass durch Drücken auf diese Fläche die Gurtbandarretierung entgegen der Federkraftwirkung aufhebbar ist.

Da der Auslösekörper nur einen geringen Schwenkbereich benötigt, um die Vorrichtung von der arretierten Stellung in die nicht arretierte Stellung zu verbringen, ist es zweckmäßig, den Auslösekörper im Wesentlichen innerhalb des Grundkörpers anzuordnen, da dieser dann dort geschützt liegt und der Bereich, in dem relativ zueinander bewegliche Bauteile angeordnet sind, von außen nicht zugänglich ist. Das heißt, es besteht nicht die Gefahr, dass bei Betätigung Finger geklemmt werden oder dergleichen.

Um sicherzustellen, dass die Vorrichtung stets bei Nichtbetätigung in Arretierstellung ist, ist mindestens eine Feder vorgesehen, welche den Auslösekörper entsprechend kraftbeaufschlagt. In einfacher Weise kann dies durch eine auf der Achse angeordnete Feder erfolgen, welche schraubenlinienförmig um einen Teil der Achse gewickelt ist und freie, radial nach außen ragende Federenden aufweist. Eines dieser Enden stützt sich dabei am Auslösekörper, das andere am Grundkörper ab. Die Feder ist zweckmäßigerweise vorgespannt. Aus Gründen einer symmetrischen Krafteinleitung ist es von Vorteil, wenn zwei solche Federn vorgesehen sind, und zwar jeweils schenkelnah im Bereich der Enden der Achse. Diese Federn sind ebenfalls von außen nicht zugänglich, so dass auch hiervon keine Klemmgefahr ausgehen kann.

Grundsätzlich kann die erfindungsgemäße Vorrichtung innerhalb eines Gurtbandes integriert werden, wobei zu einer Seite der für das Gurtbandrückhaltesystem wirksame Teil des Gurtbandes einläuft, innerhalb der Vorrichtung um 180° durch den Umlenkkörper umgelenkt wird und zur gleichen Seite als freies (nicht wirksames) Ende wieder herausläuft. Auf der anderen Seite der Vorrichtung ist üblicherweise ein weiterer Gurtbandabschnitt zu befestigen. Gemäß der Erfindung ist hierfür am Grundkörper ein weiterer Steg vorgesehen, der eine Gurtbandschlaufe aufnehmen kann, um hier das andere Gurtband zu befestigen. Die Schlaufe wird in üblicher Weise vernäht. Alternativ kann hier auch eine unmittelbare Anbringung des Gurtbands an der Vorrichtung vorgesehen sein. Auch kann die Vorrichtung statt an einem Gurt unmittelbar an einem Körper, z. B. am Fahrzeug, festgelegt sein; dann bildet sie gleichzeitig einen Fixpunkt für das Gurtbandhaltesystem.

Die Erfindung ist nachfolgend anhand eines in der Zeichnung dargestellten Ausführungsbeispiels näher erläutert. Es zeigen:
- Fig. 1: einen Inline-Versteller gemäß der Erfindung in der das Gurtband arretierenden Stellung und
- Fig. 2: den Inline-Versteller gemäß Fig. 1 in Auslösestellung,
und zwar jeweils a in Draufsicht, b in Schnittdarstellung längs der in Fig. a eingezeichneten Schnittlinie, c in Seitenansicht, d in Stirnansicht und e in perspektivischer Darstellung.

Der Inline-Versteller dient zur Einstellung der wirksamen Länge eines Gurtbandes 1 eines Gurtbandrückhaltesystems. Das für das Gurtbandrückhaltesystem wirksame Gurtbandende 2 ist in den Figuren b und c unten angeordnet. Das freie Gurtbandende 3 liegt darüber, so dass es ohne weiteres mit der Hand gefasst werden kann, wenn die Länge des wirksamen Gurtbandendes 2 verkürzt werden soll. Das für das Gurtbandrückhaltesystem wirksame Gurtbandende 2 liegt somit körpernah unten.

Die Vorrichtung weist einen Grundkörper 4 auf, der in Gurtbandrichtung 5 gesehen ein im Wesentlichen u-förmiges Querschnittsprofil aufweist. Das Bauteil 4 ist aus Blech gefertigt und weist zwei seitliche, sich aus der Grundebene des Materials senkrecht erhebende Schenkel 6 auf, welche die Vorrichtung seitlich begrenzen. Der Steg des U-Profils wird durch zwei Stegabschnitte, nämlich durch einen einen Arretierkörper 7 bildenden Stegabschnitt sowie einen in Gurtbandrichtung 5 am anderen Ende angeordneten Stegabschnitt 8, der zum Anbringen eines anderen Gurtbandendes 9 vorgesehen ist, gebildet. Das Gurtbandende 9 ist um den Stegabschnitt 8 in einer Schlaufe geführt, wobei die Schlaufenenden in an sich bekannter Weise miteinander vernäht sind, um so das Gurtbandende 9 unlösbar, jedoch beweglich am Grundkörper 4 des Inline-Verstellers zu befestigen.

In den Schenkeln 6 ist oberhalb des Stegabschnitts 8 jeweils eine kreisrunde Ausnehmung 10 vorgesehen, in der eine Achse 11 aufgenommen und festgelegt ist.

Auf der Achse 11 ist ein Auslösekörper 12 gelagert, der ebenfalls in Gurtbandrichtung 5 ein im Wesentlichen u-förmiges Querschnittsprofil aufweist. Die Schenkel 13 dieses U-Profils erstrecken sich parallel zu den Schenkeln 6 des Grundkörpers 4. Sie liegen innerhalb des durch die Schenkel 6 und den Stegbereich des Grundkörpers 4 umgebenden Raumes und weisen jeweils eine runde Ausnehmung 14 auf. Die Ausnehmungen 14 der beiden Schenkel 13 fluchten zueinander und nehmen die Achse 11 mit Spiel auf, so dass der Auslösekörper 12 an der Achse 11 schwenkbar gelagert ist.

Der Steg 15 des den Auslösekörper 12 bildenden Querschnittsprofils ist mit Abstand zur Achse 11 1 angeordnet und als Betätigungsfläche ausgebildet. Der Steg 15 ist mit Abstand zum Arretierkörper 7 angeordnet. Der Auslösekörper 12 ist ebenfalls als Blechformteil ausgebildet, die Schenkel 13 sind aus dem durch den Steg 15 gebildeten Grundmaterial des Blechs abgekantet.

Innerhalb der Schenkel 13 ist ein Umlenkkörper 16 in Richtung 5 begrenzt verschiebbar gelagert. Hierzu sind in den Stegen 15 Langlöcher 17 vorgesehen. Der Umlenkkörper 16 ist aus Vollmaterial gebildet und hat einen im Wesentlichen O-förmigen Querschnitt (siehe Figuren b). Er sitzt mit Spiel in den Langlöchern 17, ist jedoch durch die in diesem Bereich überragenden Schenkel 6 formschlüssig gehalten. Der Umlenkkörper 16 bildet in Verbindung mit dem Arretierkörper 7 die eigentlichen Arretiermittel des Inline-Verstellers.

Um sicherzustellen, dass der Auslösekörper 12 nur begrenzt gegenüber dem Grundkörper 4 verschwenkbar ist und nicht aus dem durch den Grundkörper gebildeten Raum ausschwenkt, sind an den freien Enden der Schenkel 6 des Grundkörpers 4 noch nach innen gerichtete Ansätze 18 angeformt, welche die Schenkel 13 des Auslösekörper 12 übergreifen und formschlüssig innerhalb des U-Profils des Grundkörpers 4 halten.

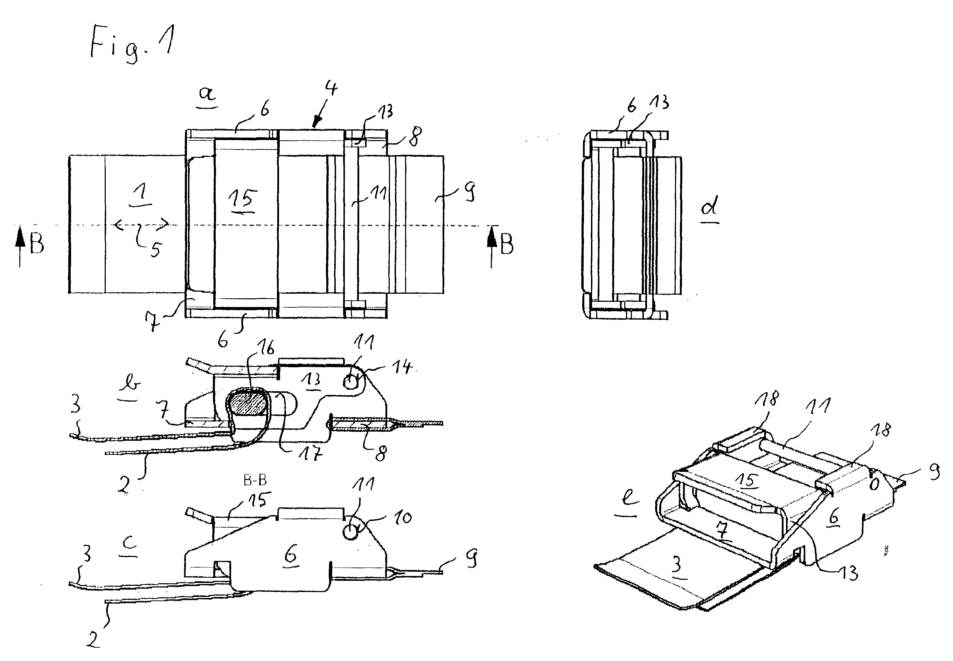

Auf der Achse 11 sitzen jeweils in den Endbereichen zwei (nicht dargestellte) Federn, die schraubenlinienförmig um die Achse 11 gewickelt sind. Die radial nach außen ragenden Enden dieser Federn stützen sich einerseits am Steg 15 des Auslösekörpers 12 und andererseits an dem durch den Arretierkörper 7 gebildeten Stegabschnitt des Grundkörpers 4 ab. Diese Federn sind vorgespannt und halten den Versteller in der in Fig. 1 dargestellten Arretierstellung, in welcher das Gurtband 1 durch den Arretierkörper 16 fixiert ist. Die Schenkel 13 liegen mit ihren Oberseiten an den Ansätzen 18 an und werden in dieser Stellung durch Federkraft gehalten.

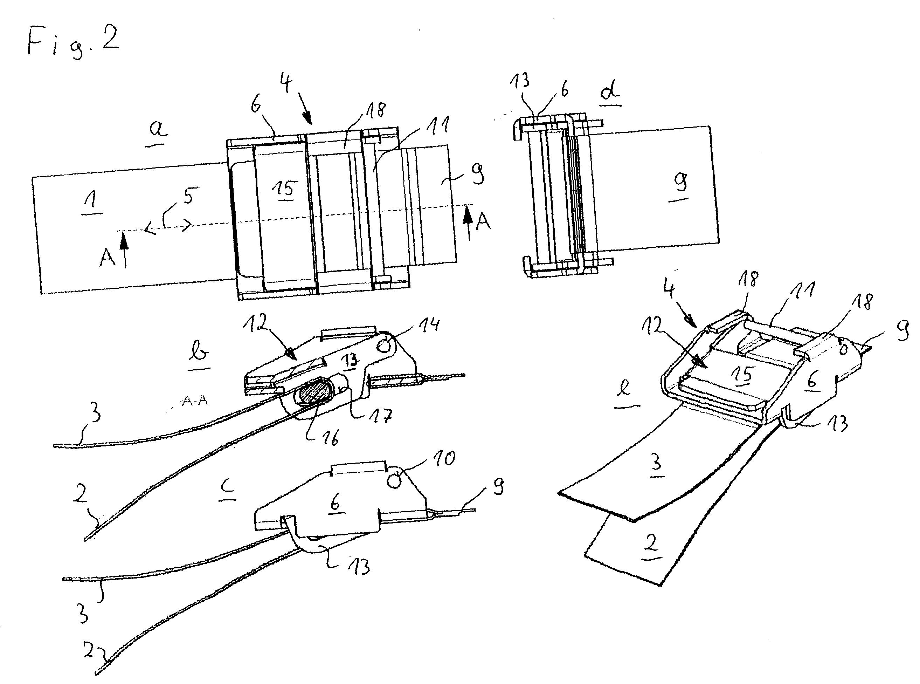

Zum Auslösen des Verstellers, d. h. zum Überführen in eine Durchlaufstellung, in der das Gurtband 1 innerhalb des Verstellers nicht fixiert ist (Fig. 2), muss lediglich auf den Steg 15 eine die Federkraft überwindende Handkraft ausgeübt werden, so dass der Auslösekörper 12 in Richtung auf den Arretierkörper 7 einschwenkt. Dabei bewegt sich der Umlenkkörper 16 an dem Arretierkörper 7 vorbei, indem er innerhalb der Langlöcher 17 sich in Richtung zum Gurtbandende 9 bewegt. Sobald der Umlenkkörper 16 an den Arretierkörper 7 nach unten vorbeibewegt ist, kann der Versteller frei in Bezug auf das Gurtband 1 bewegt werden, insbesondere in die Richtung, in der das wirksame Gurtbandende 2 verlängert wird. Beim Entlasten des Stegs 15 schwenkt der Auslösekörper 12 federkraftbedingt wieder in die in Fig. 1 dargestellte Arretierstellung zurück, in welcher das Gurtband 1 innerhalb des Verstellers festgelegt ist. Zum Verkürzen des wirksamen Gurtbandendes 2 genügt es, am freien Gurtbandende 3 zu ziehen, da aufgrund der Zugkraft der Auslösekörper 12 in die in Fig. 2 dargestellte Stellung geschwenkt wird, solange, bis die Arretierstellung (Fig. 1) selbsttätig wieder eingenommen wird, wenn die Zugkraft am Gurtbandende 3 nachlässt oder am Gurtband 2 erhöht wird.

Der Umlenkkörper 16 kann zusätzlich in Richtung zum Gurtband 1 federkraftbeaufschlagt sein; hierzu können seitlich entsprechende (nicht dargestellte) Federelemente vorgesehen sein.

### Bezugszeichenliste

- 1: - Gurtband
- 2: - wirksames Gurtbande
- 3: - freies Gurtbandende
- 4: - Grundkörper
- 5: - Gurtbandrichtung
- 6: - Schenkel
- 7: - Arretierkörper
- 8: - Stegabschnitt
- 9: - Gurtbandende
- 10: - Ausnehmung
- 11: - Achse
- 12: - Auslösekörper
- 13: - Schenkel
- 14: - Ausnehmung
- 15: - Steg
- 16: - Umlenkkörper
- 17: - Langlöcher
- 18: - Ansätze

## Patentansprüche

1. Vorrichtung zum Einstellen der wirksamen Gurtbandlänge für ein Gurtbandrückhaltesystem mit einem Grundkörper (4) und einem gegen Federkraft schwenkbar am Grundkörper (4) gelagerten Umlenkkörper (16) für das Gurtband (1), der zum Festlegen des Gurtbandes (1) am Grundkörper (4) durch Federkraft unter Einschluss des Gurtbandes (1) gegen einen Arretierkörper (7) gedrückt ist.

2. Vorrichtung nach Anspruch 1, bei der die Gurtführung so gestaltet ist, dass bei Zugbeanspruchung des an dem im Gurtbandrückhaltesystem wirksamen Gurtabschnitts (2) die Zugkraft federkraftunterstützend auf den Umlenkkörper (16) wirkt.

3. Vorrichtung nach einem der vorhergehenden Ansprüche, bei der der Grundkörper (4) in Richtung des Gurtbandverlaufs (5) einen im Wesentlichen u-förmigen Querschnitt aufweist.

4. Vorrichtung nach einem der vorhergehenden Ansprüche, bei der der Umlenkkörper (16) Teil eines Auslösekörpers (12) bildet, der innerhalb des Grundkörpers (4) begrenzt schwenkbar gelagert ist.

5. Vorrichtung nach einem der vorhergehenden Ansprüche, bei der der Auslösekörper (16) in Richtung (5) des Gurtbandverlaufs einen im Wesentlichen u-förmigen Querschnitt aufweist.

6. Vorrichtung nach einem der vorhergehenden Ansprüche, bei der der Umlenkkörper (16) in den seitlichen Schenkeln (13) des Auslösekörpers (12), vorzugsweise in Langlöchern (17), begrenzt verschiebbar gelagert ist.

7. Vorrichtung nach einem der vorhergehenden Ansprüche, bei der der Arretierkörper (7) Teil des Grundkörpers (4) ist und vorzugsweise durch einen Stegabschnitt des Grundkörperprofils gebildet ist.

8. Vorrichtung nach einem der vorhergehenden Ansprüche, bei der eine Achse (11) vorgesehen ist, die vorzugsweise in den Schenkeln (6) des Grundkörpers (4) gelagert ist und auf der der Auslösekörper (12) schwenkbar gelagert ist.

9. Vorrichtung nach einem der vorhergehenden Ansprüche, bei der der Auslösekörper (12) in seinen Schenkeln (13) Ausnehmungen (14) zur Aufnahme der Achse (11) aufweist.

10. Vorrichtung nach einem der vorhergehenden Ansprüche, bei der der mit Abstand zur Achse (11) angeordnete Stegbereich (15) eine Betätigungsfläche bildet, mit der durch Krafteinwirkung entgegen Federkraftrichtung die Gurtbandarretierung aufhebbar ist.

11. Vorrichtung nach einem der vorhergehenden Ansprüche, bei der der Auslösekörper (12) im Wesentlichen innerhalb des Grundkörpers (4) angeordnet ist.

12. Vorrichtung nach einem der vorhergehenden Ansprüche, bei der auf der Achse (11) mindestens eine Feder geführt ist, deren freie Enden sich einerseits am Grundkörper (4) und andererseits am Auslösekörper (12) abstützen.

13. Vorrichtung nach einem der vorhergehenden Ansprüche, bei der am Grundkörper (4) ein Steg (8) zur Befestigung einer Gurtbandschlaufe (9) vorgesehen ist.
